# EUROPEAN PATENT SPECIFICATION

(11) **EP 3 973 191 B1**
(45) Date of publication and mention of the grant of the patent: **29.03.2023**
(21) Application number: 19726649.7
(22) Date of filing: 23.05.2019
(51) Int. Cl.: F04D 13/06, F04D 25/06, H02K 1/12, H02K 5/128

(54) **AUTOMOTIVE ELECTRIC AUXILIARY UNIT WITH AN ELECTRIC MOTOR**
ELEKTRISCHE FAHRZEUGZUSATZEINHEIT MIT EINEM ELEKTROMOTOR
UNITÉ AUXILIAIRE ÉLECTRIQUE D'AUTOMOBILE, DOTÉE DE MOTEUR ÉLECTRIQUE

(43) Date of publication of application: 30.03.2022
(73) Proprietor: Pierburg Pump Technology GmbH, 41460 Neuss (DE)
(72) Inventor: PILENZ, Wolfgang, 41460 Neuss (DE)
(74) Representative: terpatent Patentanwälte ter Smitten Eberlein-Van Hoof Rütten Daubert
(86) International application number: PCT/EP2019/063277
(87) International publication number: WO 2020/233810

(56) References cited:
- WO-A1-2018/019378
- JP-A- 2002 034 184
- US-A1- 2013 315 760

## Description

The invention is directed to an automotive electric auxiliary unit with an electric motor.

Automotive electric auxiliary units are not provided as traction engines but are secondary devices such as, for example, vacuum pumps, liquid pumps or gas pumps. A typical gas pump is a so-called purge pump for pumping fuel vapor. Typically, an automotive electric auxiliary unit has to be as compact as possible to fit into a small and restricted installation space. A relatively simple and relatively compact concept can be an auxiliary unit with an electric motor provided with one single motor stator coil which is provided as a satellite at one radial location with respect to the rotor axis so that the electric motor is not shaped purely cylindrically. An automotive electric auxiliary unit with an electric motor with a satellite-like motor stator coil is disclosed in WO 2018/033194 A1. However, the satellite-like motor stator coil causes a relatively large radial protrusion which needs to be considered in the general spatial concept of the auxiliary unit. Another automotive electric auxiliary unit is known from WO 2018/019378 A1.

It is an object of the invention to provide an automotive electric auxiliary unit having an improved adaptability with respect to a restricted installation space.

This object is achieved with an automotive electric auxiliary unit with an electric motor with the features of claim 1.

The auxiliary unit according to the invention is provided with an electromagnetic motor stator. The motor stator is provided with a motor stator coil generating an electromagnetic field that interacts with a rotatable motor rotor via a stator sheet pack of packed stator sheets. The rotor assembly is provided with a rotatable rotor shaft supporting the permanently magnetized and co-rotating motor rotor and directly or indirectly driving a mechanical element. The mechanical element is preferably a pump rotor being fixed co-rotatingly at the rotor shaft. The rotor assembly is rotating around an axial rotor axis.

The motor stator generally can be provided with a plurality of separate motor stator coils but is preferably provided with only one single motor stator coil which is arranged satellite-like at the stator sheet pack. The stator sheet pack is defined by a plurality of packed stator sheets which are all identical with each other in their material, shape and thickness. The stator sheet pack is inclined with an angle of inclination of at least 2°, preferably with an angle of inclination of at least 10°, with respect to the cross plane of the rotor shaft. The cross plane of the rotor assembly is exactly perpendicular to the rotor axis. The stator sheets are laterally displaced with respect to each other. The lateral displacement of the stator sheets with respect to each other, seen in normal direction, cause and define the stator sheet pack to be an inclined parallelogram, seen in a side view or seen in a longitudinal cross plane at a rotational position defined by the angle sector plane between the cross plane and the maximum inclination of the stator sheet pack.

Providing the stator sheet pack with an inclination with respect to the cross plane allows to adapt the outer shape of the auxiliary unit to the available installation space where the auxiliary unit is placed within the automobile. Preferably, the electric motor is provided with only one single stator coil which is provided satellite-like and radially exposed at one circumferential position around the rotor axis. The axial position of the radially exposed stator coil can be adapted by inclining the stator sheet plane of the stator sheet pack accordingly. This allows to position the stator coil axially within a certain range. This allows, for example, to position the satellite-like stator coil, seen in axial direction, closer to the pump rotor or more remote in relation to the pump rotor. However, with the inclined stator sheet pack the stator coil of the motor stator needn't be positioned anymore in complete axial overlap with the motor rotor but can be positioned axially offset in part or completely in relation to the motor rotor. The electro-magnetic efficiency is only minimally deteriorated by the inclination of the stator sheet pack.

Preferably, the complete outer lateral surface of the stator sheet pack is generally parallel to the rotor axis. The stator sheets are made of a metal with high electromagnetic conductivity. The metal sheets that can be produced by punching. The metallic stator sheets can be, for example, provided with pin-like surface elevations and corresponding indentations on the back side of each metal sheet. The pin-like surface elevations of one sheet are pressed into the indentations of the adjacent sheet, thereby creating a mechanical connection between the sheets. The elevations and indentations are orientated in axial direction.

Preferably, the motor rotor is provided with at least one permanent magnet. The permanent rotor magnet or a specific number of permanent rotor magnets are mounted to the motor rotor and interact with the electro-magnetic field generated by the motor stator and thereby cause the motor rotor to rotate.

Preferably, each individual stator sheet is provided with a substantially elliptical sheet opening in the sheet plane and seen in normal direction with respect to the stator sheet. The sheet opening can be made, for instance, by punching. The sheet openings of all stator sheets packed together define a sheet pack opening which is, seen in axial direction, substantially circular or cylindrical. The motor rotor is arranged substantially concentrically within the sheet pack opening. Due to the inclined arrangement of the stator sheets of the sheet pack with respect to the motor rotor, the axial projection of the sheet openings is substantially circular. The orientation of the substantially cylindrical pack opening is parallel to the rotor shaft so that the cylindrical pack opening is in alignment with the rotor axis.

In a preferred embodiment of the invention, the axial length of the rotor body is lying within the total axial length of the sheet pack opening.

In a preferred design of the invention, the automotive electric auxiliary unit is provided with a centrifugal pump rotor which is co-rotatably fixed at the rotor shaft. This auxiliary unit preferably serves as a fuel vapor pump and pumps the gaseous fuel into the combustion chamber of the internal combustion engine of an automotive device to avoid fuel vapor emissions. Preferably, the auxiliary unit comprises a separating can that is arranged radially inside the motor rotor opening. The separating can is substantially cylindrical and surrounds the rotor body radially. The separating can separate the gas or fluid, for example fuel vapor, from the dry parts of the electric motor comprising the motor stator. Preferably, the material of the separating can is defined by high magnetic permeability in order to not affect the magnetic field created by the stator coil.

One embodiment of the invention is described with reference to the enclosed drawings, wherein
figure 1 shows schematically a longitudinal section of an automotive electric auxiliary unit with an electric motor comprising an inclined stator sheet pack,
figure 2 shows a normal view II of the stator sheet pack of the automotive electric auxiliary unit of figure 1, and
figure 3 shows an axial view III of the stator sheet pack of figure 1.

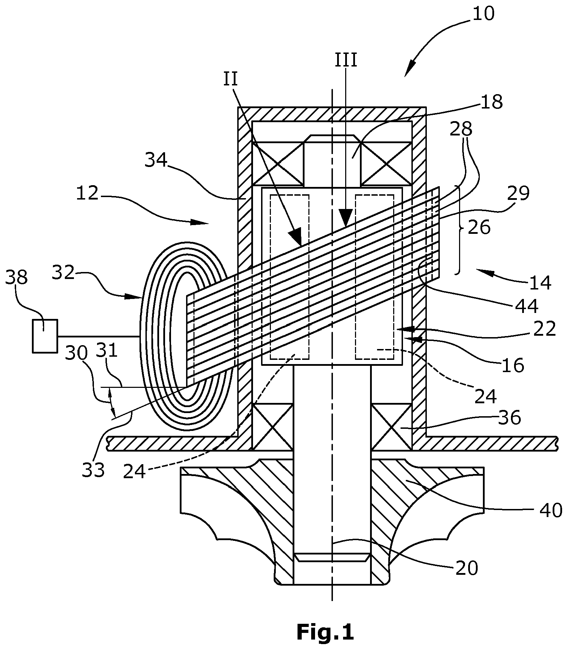

Figure 1 shows an asymmetric arrangement of an automotive auxiliary unit 10 comprising an electric motor 12. The electric motor 12 is provided with a static motor stator 14, a rotatable motor rotor 16 and a rotatable rotor shaft 18.

The substantially cylindrical motor rotor 16 is co-rotatably fixed to the metallic rotor shaft 18. Both, the motor rotor 16 and the metallic rotor shaft 18 rotate around a rotor axis 20. The motor rotor 16 is provided with a rotor body 22 comprising permanent magnets 24.

The motor stator 14 comprises a stator sheet pack 26 that consists of a plurality of identical stator sheets 28. The stator sheets 28 are stacked together, and, seen in normal direction with respect to the sheet plane 33, adjacent stator sheets 28 are laterally displaced with respect to each other. The complete shell surface 29 of the stator sheet pack 26 is parallel to the rotor axis 20.

The stator sheet pack 26 and the stator sheets 28 are not lying I a cross plane but are positively inclined by an angle of inclination 30 between the sheet plane 33 and the cross plane 31 of the rotor shaft 18. The angle of inclination 30 in the embodiment in figure 1 is about 20°. Adjacent stator sheets 28 are mechanically connected to each other by pressing via pin-like surface elevations and corresponding indentations (not shown) on the back side of each stator sheet 28 which are both orientated axially.

The stator sheet pack 26 is fixed directly or indirectly to a pump unit housing not shown in the figures. An electro-magnetic coil 32 is wound and attached to the stator sheet pack 26. The electric energization of the stator coil 32 generates a magnetic field that propagates through a cylindrical separating can 34 and causes an electromagnetic interaction with the permanent magnets 24 of the rotor body 22 to thereby cause a rotation of the motor rotor 16. The separating can 34 fluidically separates the fuel vapor that is pumped by the pump rotor 40 from the dry part of the auxiliary unit 10 which comprises the motor stator 14.

The rotor shaft 18 is supported by two bearings 36 that axially and radially position the rotor shaft 18. The auxiliary unit 10 is provided with a control unit 38 that controls the electric motor 12 and, in particular, controls the energization of the stator coil 32. A pump rotor 40 is co-rotatably mounted and fixed to the proximal axial end of the rotor shaft 18 facing away from the electric motor 12.

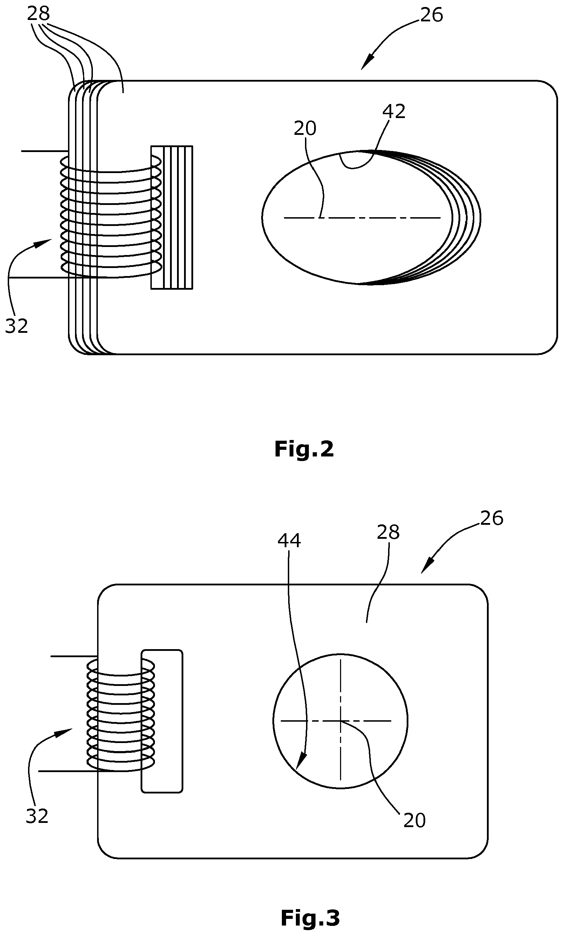

Figure 2 shows a normal view of the stator sheet pack 26. Each stator sheet 28 is provided with a substantially elliptical sheet opening 42. All sheet openings 42 together define a sheet pack opening 44. Figure 3 shows an axial view of the stator sheet pack 26 with a substantially circular sheet pack opening 44' seen in axial direction.

### Reference List

- 10: auxiliary unit
- 12: electric motor
- 14: motor stator
- 16: motor rotor
- 18: rotor shaft
- 20: rotor axis
- 22: rotor body
- 24: permanent magnet
- 26: stator sheet pack
- 28: stator sheets
- 29: shell surface of the stator sheet pack
- 30: angle of inclination
- 31: cross plane
- 32: stator coil
- 33: sheet plane
- 34: separating can
- 36: bearings
- 38: control unit
- 40: pump rotor
- 42: sheet opening
- 44: sheet pack opening

## Claims

1. An automotive electric auxiliary (10) unit with an electric motor (12), comprising
- a static motor stator (14),
- a rotatable rotor shaft (18), and
- a rotatable motor rotor (16) co-rotatably fixed to the rotor shaft (18) and rotating about a rotor axis (20) and comprising a permanent magnetic rotor body (22),
wherein the motor stator (14) comprises a stator coil (32) and a stator sheet pack (26) with numerous packed stator sheets (28)
, **characterized in that**
the parallel sheet planes (33) are not arranged in a cross plane (31), which is a plane which is exactly perpendicular to the rotor axis, but are inclined with an angle of inclination (30) of at least 2° to the cross plane (31).

2. The automotive electric auxiliary unit (10) with an electric motor (12) according to claim 1, wherein the adjacent stator sheets (28) are laterally displaced with respect to each other seen in the normal direction of the stator sheets (28) of the stator sheet pack (26).

3. The automotive electric auxiliary unit (10) according to one of the preceding claims, wherein the motor stator (14) comprises only one single stator coil (32) which is arranged satellite-like.

4. The automotive electric auxiliary unit (10) with an electric motor (12) according to one of the preceding claims, wherein the angle of inclination (30) of the stator sheets (28) is at least 10°.

5. The automotive electric auxiliary unit (10) with an electric motor (12) according to one of the preceding claims, wherein the motor rotor (16) is provided with at least one permanent magnet (24).

6. The automotive electric auxiliary unit (10) with an electric motor (12) according to one of the preceding claims, wherein each stator sheet (28) of the stator sheet pack (26) is provided with a substantially elliptical sheet opening (42) in the sheet plane (33).

7. The automotive electric auxiliary unit (10) with an electric motor (12) according to one of the preceding claims, wherein the stator sheet pack (26) is provided with a substantially cylindrical sheet pack opening (44) in the rotor cross plane (31).

8. The automotive electric auxiliary unit (10) with an electric motor (12) according to one of the preceding claims, wherein the rotor body (22), seen in radial direction, axially completely overlaps the sheet pack opening (44) of the stator sheet pack (26).

9. The automotive electric auxiliary unit (10) with an electric motor (12) according to one of the preceding claims, wherein the auxiliary unit (10) is provided with a centrifugal pump rotor (40) co-rotatably fixed to the rotor shaft (18).

10. The automotive electric auxiliary unit (10) with an electric motor (12) according to one of the preceding claims, wherein a separating can (34) is provided which fluidically separates the motor stator (14) from the motor rotor (16).

11. The automotive electric auxiliary unit (10) of according to all of claims 8 to 10, wherein the auxiliary unit (10) is a fuel vapor pump.

## Patentansprüche

1. Das elektrische Kraftfahrzeug-Hilfsaggregat (10) mit einem Elektromotor (12), das folgendes aufweist
- einen statischen Motorstator (14),
- eine drehbare Rotorwelle (18), und
- einen drehbaren Motorrotor (16), der an der Rotorwelle (18) mitdrehend befestigt ist und sich um eine Rotorachse (20) dreht und einen permanentmagnetischen Rotorkörper (22) aufweist,
wobei der Motorstator (14) eine Statorspule (32) und ein Statorblechpaket (26) mit zahlreichen gepackten Statorscheiben (28) aufweist, **dadurch gekennzeichnet, dass**
die parallelen Scheibenebenen (33) nicht in einer Querebene (31) angeordnet sind, die genau senkrecht zur Rotorachse steht,
sondern mit einem Neigungsgrad (30) von mindestens 2° zur Querebene (31) angewinkelt sind.

2. Das elektrische Kraftfahrzeug-Hilfsaggregat (10) mit einem Elektromotor (12) nach Anspruch 1, wobei die benachbarten Statorscheiben (28) in der Normalenrichtung der Statorscheiben (28) des Statorscheibenpakets (26) gesehen seitlich zueinander versetzt sind.

3. Das elektrische Kraftfahrzeug-Hilfsaggregat (10) nach einem der vorhergehenden Ansprüche, wobei der Motorstator (14) nur eine einzige Statorspule (32) aufweist, die satellitenartig angeordnet ist.

4. Das elektrische Kraftfahrzeug-Hilfsaggregat (10) mit einem Elektromotor (12) nach einem der vorhergehenden Ansprüche, wobei der Neigungsgrad (30) der Statorscheiben (28) mindestens 10° beträgt.

5. Das elektrische Kraftfahrzeug-Hilfsaggregat (10) mit einem Elektromotor (12) nach einem der vorhergehenden Ansprüche, wobei der Motorrotor (16) mit mindestens einem Permanentmagneten (24) ausgestattet ist.

6. Das elektrische Kraftfahrzeug-Hilfsaggregat (10) mit einem Elektromotor (12) nach einem der vorhergehenden Ansprüche, wobei jedes Statorblech (28) des Statorblechpakets (26) mit einer im Wesentlichen elliptischen Scheibenöffnung (42) in der Scheibenebene (33) versehen ist.

7. Das elektrische Kraftfahrzeug-Hilfsaggregat (10) mit einem Elektromotor (12) nach einem der vorhergehenden Ansprüche, wobei das Statorblechpaket (26) in der Rotorquerebene (31) mit einer im wesentlichen zylindrischen Scheibenpaketöffnung (44) versehen ist.

8. Das elektrische Kraftfahrzeug-Hilfsaggregat (10) mit einem Elektromotor (12) nach einem der vorhergehenden Ansprüche, wobei der Rotorkörper (22), in radialer Richtung gesehen, die Scheibenpaketöffnung (44) des Statorblechpakets (26) axial vollständig überlappt.

9. Das elektrische Kraftfahrzeug-Hilfsaggregat (10) mit einem Elektromotor (12) nach einem der vorhergehenden Ansprüche, wobei das Hilfsaggregat (10) mit einem an der Rotorwelle (18) drehfest angebrachten Zentrifugalpumpenrotor (40) versehen ist.

10. Das elektrische Kraftfahrzeug-Hilfsaggregat (10) mit einem Elektromotor (12) nach einem der vorhergehenden Ansprüche, wobei ein Spalttopf (34) vorgesehen ist, der den Motorstator (14) fluidisch vom Motorrotor (16) trennt.

11. Das elektrische Kraftfahrzeug-Hilfsaggregat (10) nach einem der Ansprüche 8 bis 10, wobei das Hilfsaggregat (10) eine Kraftstoffdampfpumpe ist.

## Revendications

1. Un unité auxiliaire électrique pour automobile (10) avec un moteur électrique (12), qui comprend
- un stator de moteur statique (14),
- un arbre de rotor rotatif (18), et
- un rotor de moteur rotatif (16) fixé de manière co-rotative à l'arbre de rotor (18) et tournant autour d'un axe de rotor (20) et qui comprend un corps de rotor magnétique permanent (22),
dans lequel le stator du moteur (14) comprend une bobine de stator (32) et un paquet de tôles de stator (26) avec de nombreuses tôles de stator emballées (28), **caractérisé en ce que**
les plans de tôles parallèles (33) ne sont pas arrangés dans un plan transversal (31), qui est un plan exactement perpendiculaire à l'axe du rotor,
mais sont inclinés avec un angle d'inclinaison (30) d'au moins 2° sur le plan transversal (31).

2. L'unité auxiliaire électrique pour automobile (10) avec un moteur électrique (12) selon la revendication 1, dans laquelle les tôles de stator adjacentes (28) sont déplacées latéralement les unes par rapport aux autres, vues dans la direction normale des tôles de stator (28) du paquet de tôles de stator (26).

3. L'unité auxiliaire électrique pour automobile (10) selon l'une des revendications précédentes, dans laquelle le stator du moteur (14) comprend seulement une bobine de stator unique (32) qui est arrangée comme un satellite.

4. L'unité auxiliaire électrique pour automobile (10) avec un moteur électrique (12) selon l'une des revendications précédentes, dans laquelle l'angle d'inclinaison (30) des tôles de stator (28) est au moins de 10°.

5. L'unité auxiliaire électrique pour automobile (10) avec un moteur électrique (12) selon l'une des revendications précédentes, dans laquelle le rotor du moteur (16) est fourni avec au moins un aimant permanent (24).

6. L'unité auxiliaire électrique pour automobile (10) avec un moteur électrique (12) selon l'une des revendications précédentes, dans laquelle chaque tôle de stator (28) du paquet de tôles de stator (26) est pourvue d'une ouverture de tôle substantiellement elliptique (42) dans le plan de la tôle (33).

7. L'unité auxiliaire électrique pour automobile (10) avec un moteur électrique (12) selon l'une des revendications précédentes, dans laquelle le paquet de tôles de stator (26) comprend une ouverture de paquet de tôles substantiellement cylindrique (44) dans le plan transversal du rotor (31).

8. L'unité auxiliaire électrique pour automobile (10) avec un moteur électrique (12) selon l'une des revendications précédentes, dans laquelle le corps de rotor (22), vu dans la direction radiale, recouvre axialement complètement l'ouverture de paquet de tôles (44) du paquet de tôles de stator (26).

9. L'unité auxiliaire électrique pour automobile (10) avec un moteur électrique (12) selon l'une des revendications précédentes, dans laquelle l'unité auxiliaire (10) comprend un rotor de pompe centrifuge (40) fixé de manière co-rotative à l'arbre de rotor (18).

10. L'unité auxiliaire électrique pour automobile (10) avec un moteur électrique (12) selon l'une des revendications précédentes, dans laquelle une boîte de séparation (34) est fournie qui sépare fluidiquement le stator du moteur (14) du rotor du moteur (16).

11. L'unité auxiliaire électrique pour automobile (10) selon toutes les revendications 8 à 10, dans laquelle l'unité auxiliaire (10) est une pompe à vapeur de carburant.
